# FASCICULE DE BREVET EUROPEEN

(11) **EP 1 637 914 B1**
(45) Date de publication et mention de la délivrance du brevet: **10.12.2008**
(21) Numéro de dépôt: 05108640.3
(22) Date de dépôt: 20.09.2005
(51) Int. Cl.: G02B 26/08, B81B 3/00

(54) **Miroir à déformation locale par variation d`épaisseur d`un matériau électro-actif contrôlée par effet électrique**
Lokal deformierbarer Spiegel aus elektroaktivem Material, dessen Dicke mittels elektrischen Effekten variiert werden kann
Locally deformable mirror comprising electroactive material whose thickness can be varied by means of electrical effects

(30) Priorité: 20.09.2004 FR 0452092
(43) Date de publication de la demande: 22.03.2006
(73) Titulaire: Alcatel Lucent, 75008 Paris (FR)
(72) Inventeur: DUPUIS, Jean, 06810, AURIBEAU SUR SIAGNE (FR)
(74) Mandataire: Esselin, Sophie

(56) Documents cités:
- EP-A- 0 793 120
- US-A1- 2003 166 773
- US-B1- 6 464 363
- WEYRAUCH T ET AL: "Performance evaluation of micromachined mirror arrays for adaptive optics" PROCEEDINGS OF THE SPIE - THE INTERNATIONAL SOCIETY FOR OPTICAL ENGINEERING SPIE-INT. SOC. OPT. ENG USA, vol. 4124, 2000, pages 32-41, XP002323250 ISSN: 0277-786X
- CLAIRE DIVOUX: "A Micromachined Micromachined Deformable Deformable Mirror for Adaptive Optics"[Online] 2003, XP002323249 Extrait de l'Internet: URL:http://www-leti.cea.fr/commun/AR-2003/ T3-Microsystems/17-divoux.pdf> [extrait le 2005-04-05]

## Description

L'invention concerne le domaine des instruments optiques à haute, voire très haute, résolution.

Comme le sait l'homme de l'art, certains instruments optiques comportent des aberrations géométriques qu'il est d'autant plus impératif de compenser que la résolution recherchée est élevée.

Afin de compenser ces aberrations géométriques au moins deux solutions ont été proposées.

Une première solution consiste à utiliser des cristaux liquides pour faire varier l'indice du verre sous l'action d'un champ électrique. L'inconvénient de cette solution réside dans le fait qu'elle engendre des aberrations chromatiques, si bien qu'elle est difficilement applicable aux instruments multi-spectraux ou aux instruments à large bande spectrale.

Une seconde solution consiste à utiliser des miroirs déformables (ou actifs). Il s'agit ici de contrôler la déformation de la surface réfléchissante d'un miroir au niveau d'une pupille de l'instrument d'observation dont les aberrations géométriques doivent être compensées.

L'université de Delft a ainsi proposé de placer, à une distance choisie d'un substrat comportant un circuit imprimé sur lequel sont définies des électrodes raccordées à des circuits d'alimentation électrique, une membrane suspendue réfléchissante raccordée à la masse desdits circuits d'alimentation électrique. En plaçant une électrode à un potentiel électrique choisi, la membrane suspendue réfléchissante est attirée vers cette électrode si bien qu'elle se déforme.

Cette solution présente au moins deux inconvénients.

Un premier inconvénient est dû à l'intégration de la membrane sur son support. Les contraintes de fixation de la membrane flexible sur la monture circulaire engendrent en effet des déformations qu'il faut minimiser mécaniquement et qui peuvent réapparaître sous l'effet de variations de température et de gradients de température locaux.

Un second inconvénient est dû à la force électrostatique appliquée par les actionneurs (ou électrodes) sur la membrane. En effet, cette force électrostatique étant proportionnelle à la tension appliquée au carré (V²), les actionneurs ne peuvent exercer qu'une force de traction sur la membrane qui tend à la rapprocher d'eux. Il est par conséquent nécessaire d'appliquer une tension de décalage (ou "offset") pour amener le plan de la membrane plus près du plan des électrodes de façon à tenter de créer des « bosses » sur la membrane en relâchant localement la force de traction. Cette solution impose d'utiliser une partie de la capacité d'actionnement des électrodes. En raison de sa forte courbure, une couronne périphérique du miroir ne peut donc plus être utilisée pour la correction des aberrations, ce qui induit une réduction de la surface utile. En outre, en cas de panne d'alimentation, et donc de disparition de la tension de décalage, le déplacement de la membrane réfléchissante et sa variation de courbure dérèglent l'instrument, ce qui peut rendre l'image inexploitable. Miroirs déformables sont connus de US 6464363 et EP 0793120.

Aucune solution connue n'apportant une entière satisfaction, l'invention a donc pour but d'améliorer la situation.

Elle propose à cet effet un miroir déformable comprenant i) un substrat, isolant électriquement, (de préférence rigide) et présentant une face avant sensiblement plane, ii) un premier étage comprenant au moins deux électrodes planes placées en des endroits choisis au dessus de la face avant du substrat, iii) une première couche en matériau électro-actif placée au contact de la face avant des électrodes du premier étage et propre à être déformée localement sous l'action d'une différence de potentiel électrique locale choisie, iv) une couche réfléchissante électriquement conductrice, définissant une électrode de masse raccordée à une masse électrique et placée au dessus de la face avant de la première couche électro-active, et v) des premiers circuits d'alimentation électrique chacun raccordés, d'une part, à la masse électrique, et d'autre part, à au moins l'une des électrodes du premier étage de manière à instaurer localement, sur ordre, une différence de potentiel choisie propre à déformer localement une zone de la première couche électro-active placée sensiblement au droit de l'électrode ; caractérisé en ce qu'il comprend en outre au moins un second étage comprenant au moins deux électrodes planes et intercalé entre la face avant du substrat et la face arrière du premier étage, ii) au moins une couche conductrice intercalaire, définissant une électrode de masse raccordée à la masse électrique et intercalée entre la face arrière du premier étage et le second étage, iii) au moins une seconde couche en matériau électro-actif, intercalée entre la face avant des électrodes du second étage et la face arrière de la couche conductrice intercalaire, et propre à être déformée localement sous l'action d'une différence de potentiel électrique choisie, et iv) des seconds circuits d'alimentation électrique chacun raccordés, d'une part, à la masse électrique, et d'autre part, à au moins l'une des électrodes du second étage de manière à instaurer localement, sur ordre, une différence de potentiel choisie propre à déformer localement une zone de la seconde couche électro-active placée sensiblement au droit de l'électrode.

Le miroir selon l'invention peut comporter d'autres caractéristiques qui pourront être prises séparément ou en combinaison, et notamment :
- les électrodes de chaque étage peuvent être sensiblement de la même forme et placées sensiblement les unes au dessus des autres,
- en variante, les électrodes de chaque étage peuvent être sensiblement de la même forme et placées les unes au dessus des autres dans des positions partiellement décalées afin de se recouvrir partiellement,
- chaque couche de matériau électro-actif peut être solidarisée par adhésion aux couches qui l'entourent,
- au moins une couche isolante intercalaire peut être intercalée entre la face arrière du premier étage d'électrodes et la couche conductrice intercalaire,
- chaque étage peut être un circuit imprimé sur lequel sont définies les électrodes,
- les électrodes de chaque étage peuvent être de forme sensiblement hexagonale et disposées les unes par rapport aux autres conformément à un pavage triangulaire,
- l'une au moins des électrodes de chaque étage peut comprendre au moins un évidement de forme choisie. Cet évidement est par exemple en forme d'étoile à n branches,
- les électrodes peuvent être raccordées à leurs circuits d'alimentation électrique respectifs par leur face arrière, ou bien dans leur plan, par exemple en utilisant des interstices du pavage,
- chaque déformation locale est préférentiellement fonction de la différence de potentiel choisie, de l'épaisseur de la couche électro-active concernée et du type du matériau électro-actif de la couche électro-active concernée,
- le matériau électro-actif peut être un terpolymère, comme par exemple un copolymère dopé au fluor,
- la couche réfléchissante peut être réalisée dans un matériau métallique,
- au moins une couche intercalaire additionnelle semi-rigide et conductrice (ou rendue conductrice) peut être placée entre la couche réfléchissante (définissant une électrode de masse) et la première couche électro-active. Cette couche intercalaire additionnelle peut par exemple présenter une épaisseur comprise entre environ une dizaine de microns et quelques centaines de microns. Par ailleurs, cette couche intercalaire additionnelle peut être solidarisée par adhésion aux couches qui l'entourent.

L'invention est particulièrement bien adaptée, bien que de façon non exclusive, aux instruments optiques utilisés dans le cadre d'observations spatiales ou terrestres. De tels instruments d'optique comprennent par exemple un télescope couplé à un miroir déformable du type de celui présenté ci-avant. Par ailleurs, ces instruments d'optique peuvent également comprendre des moyens d'asservissement chargés d'effectuer des mesures sur la face active de leur miroir déformable afin de contrôler sa forme par les tensions appliquées à ses différentes électrodes.

D'autres caractéristiques et avantages de l'invention apparaîtront à l'examen de la description détaillée ci-après, et des dessins annexés, sur lesquels :
- la figure 1 illustre de façon schématique, dans une vue en coupe transversale, un premier exemple de réalisation d'un miroir déformable selon l'invention,
- la figure 2 illustre de façon schématique, dans une vue en perspective éclatée, les principaux constituants du miroir déformable de la figure 1,
- la figure 3 illustre de façon schématique, dans une vue du dessus, un exemple de pavage d'électrodes planes,
- la figure 4 illustre de façon schématique, dans une vue en coupe transversale, un deuxième exemple de réalisation d'un miroir déformable selon l'invention,
- la figure 5 illustre de façon schématique, dans une vue en coupe transversale, un troisième exemple de réalisation d'un miroir déformable selon l'invention,
- la figure 6 illustre de façon schématique, dans une vue en coupe transversale, un quatrième exemple de réalisation d'un miroir déformable selon l'invention,
- la figure 7 illustre de façon schématique, dans une vue en coupe transversale, un premier exemple de réalisation d'une partie d'un instrument d'observation équipé d'un miroir déformable selon l'invention, et
- la figure 8 illustre de façon schématique, dans une vue en coupe transversale, un second exemple de réalisation d'une partie d'un instrument d'observation équipé d'un miroir déformable selon l'invention.

Les dessins annexés pourront non seulement servir à compléter l'invention, mais aussi contribuer à sa définition, le cas échéant.

Les dimensions relatives des éléments représentés sur les figures ne sont pas représentatives des dimensions relatives réelles.

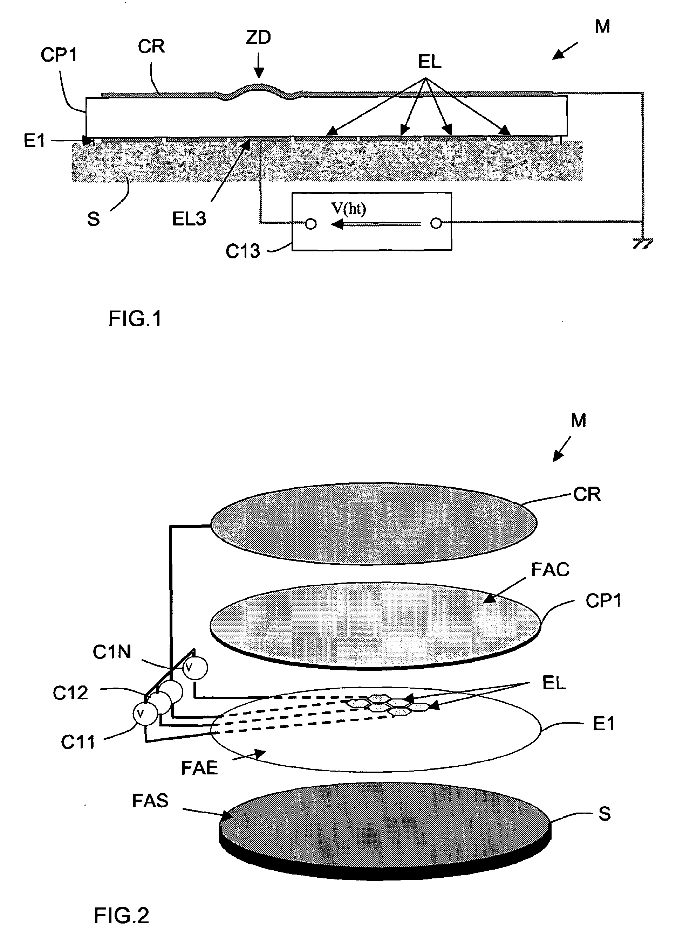

On se réfère tout d'abord aux figures 1 et 2 pour décrire un premier exemple de réalisation d'un miroir déformable (ou actif) selon l'invention.

Comme indiqué dans la partie d'introduction, un miroir déformable M est destiné à compenser les aberrations géométriques d'un instrument optique au niveau de l'une de ses pupilles.

Dans ce qui suit, on considère à titre d'exemple illustratif, non limitatif, que l'instrument optique est un instrument d'observation, éventuellement à haute résolution, embarqué dans un ou plusieurs engins spatiaux, comme par exemple un ou plusieurs satellites ou une navette spatiale, et destiné à observer la terre depuis l'espace. Le flux lumineux doit être analysé après traversée de l'instrument qui introduit les aberrations géométriques, mais ces dernières peuvent être corrigées en un point quelconque, préférentiellement en sortie également, pour des raisons de compacité. On réalise donc une image de la pupille de sortie de l'instrument sur la face active du miroir. Dans ce cas, la bande passante du miroir est d'environ quelques hertz pour quelques dizaines de microns de déformation au maximum.

Mais, l'invention n'est pas limitée à cette application. Elle peut être utilisée dans tout type d'instrument optique présentant des aberrations géométriques, et notamment dans le domaine de l'astronomie terrestre (par exemple pour la correction des aberrations dues à l'atmosphère - dans ce cas la bande passante du miroir est d'environ une centaine de hertz pour quelques microns de déformation), ou dans le domaine de l'instrumentation scientifique (en particulier les lasers, notamment de puissance), ou dans le domaine industriel, ou encore dans le domaine de l'imagerie médicale (en particulier en ophtalmologie). L'invention peut également s'appliquer à la correction de forme d'un grand miroir, tel qu'un miroir primaire de télescope, ou à chacune de ses parties dans le cas d'un grand miroir segmenté.

Par ailleurs, on considère dans ce qui suit que le miroir M est plan, mais cela n'est pas une obligation.

Comme cela est illustré sur la figure 1, un miroir déformable M, selon l'invention, est constitué d'un empilement d'un substrat S isolant électriquement et présentant une face avant FAS sensiblement plane, d'au moins un premier étage E1 comprenant au moins deux électrodes planes EL raccordées à des circuits d'alimentation électrique C1i (i=1 à N), d'au moins une première couche CP1 en matériau électro-actif, et d'une couche réfléchissante CR électriquement conductrice et définissant une électrode de masse raccordée à la masse électrique des circuits d'alimentation C1 i.

Plus précisément, dans l'exemple illustré sur les figures 1 et 2, le substrat S comprend une face avant FAS à laquelle est solidarisée le premier étage E1 d'électrodes planes EL. Le substrat S est de préférence rigide. Il est par exemple réalisé dans un matériau tel que du verre (par exemple de type ULE ® ou zérodur ®). Mais tout autre matériau stable et isolant (ou isolé) électriquement peut être utilisé, et notamment les matériaux composites de type carbone-carbone ou le SiC fritté.

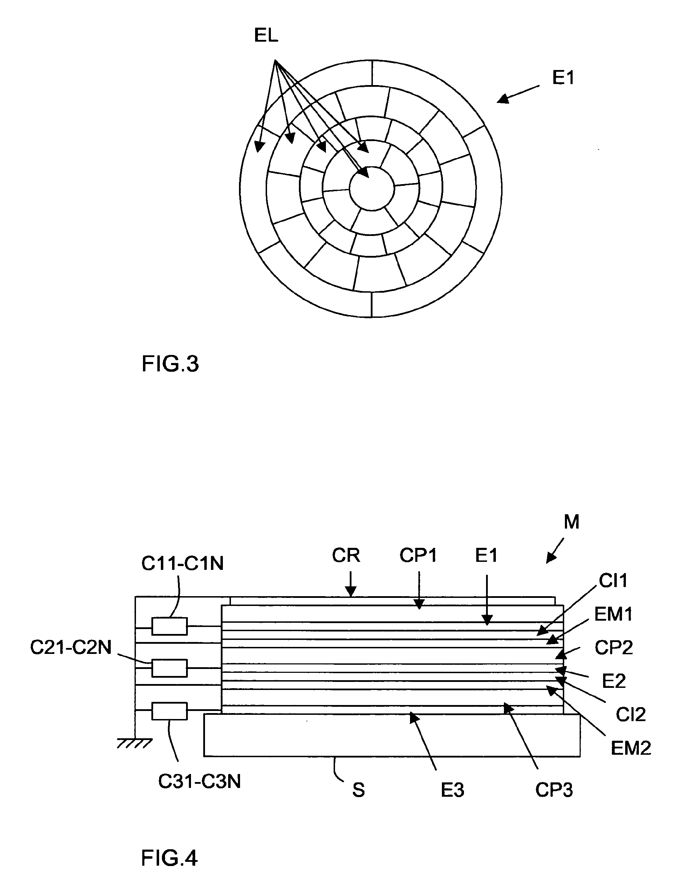

Les électrodes planes EL du premier étage E1 sont placées en des endroits choisis sous la face arrière de la première couche électro-active CP1 (opposée à sa face avant FAE), de manière à permettre la déformation de zones choisies de cette dernière, comme on le verra plus loin. Elles sont par exemple de forme hexagonale et agencées les unes par rapport aux autres de manière à constituer un pavage triangulaire. Mais, bien entendu d'autres formes peuvent être envisagées pour les électrodes. De même, tout autre type de positionnement d'électrodes peut être envisagé, comme par exemple celui illustré sur la figure 3 qui comporte une quarantaine d'électrodes planes et coplanaires agencées au sein de cinq couronnes concentriques.

Comme cela est schématiquement illustré sur la figure 2, le premier étage E1 est par exemple un circuit imprimé sur lequel sont définies, notamment, les électrodes planes EL. Mais, on peut également envisager de définir directement les électrodes EL sur la face avant FAS du substrat S, par exemple par dépôt sous vide.

La première couche électro-active CP1 est placée au contact de la face avant FAE du premier étage E1 et donc de ses électrodes EL. Elle est réalisée dans un matériau électro-actif pouvant être déformé localement sous l'action d'une différence de potentiel électrique locale choisie. De préférence, le matériau électro-actif est un terpolymère, comme par exemple un copolymère dopé au fluor. Plus préférentiellement encore, le matériau électro-actif est un polymère P[VF2 VF3 CFE] composé de trois monomères VF2 (ou VDF (difluorure de vinyle)), VF3 (ou TrFE (trifluorure d'éthylène)) et CFE (ou chlorofluorure d'éthylène), appelé ISL 3. Un tel matériau est synthétisé par l'ISL (Institut Franco-Allemand de Saint Louis en France).

La première couche électro-active CP1 peut être réalisée, par exemple, par une technique de revêtement par rotation (ou « spin coating »). Cette technique consiste à déposer une petite quantité de matière sur la surface à couvrir puis à entraîner en rotation ladite surface de sorte que la matière s'étale de façon homogène jusqu'à constituer une couche d'épaisseur choisie. En variante, on peut également réaliser la couche électro-active par dépôt en phase liquide. A cet effet, on peut par exemple appliquer le polymère après l'avoir mélangé à un solvant, ce qui laisse après séchage un film présentant un bon état de surface. Dans une autre variante, ce film peut être directement réalisé par pulvérisation sur la surface de support.

Le nombre de premiers circuits d'alimentation C1i est préférentiellement égal au nombre d'électrodes EL du premier étage E1, de manière à permettre le placement de chaque électrode sous un potentiel électrique choisi indépendamment des autres électrodes du premier étage E1. Ainsi, en présence de N électrodes EL on peut déformer sélectivement, en contrôlant les N circuits d'alimentation C11 à C1 N, de une à N zones différentes de la première couche électro-active CP1.

On peut au moins soit déformer localement une seule zone en utilisant une seule électrode EL raccordée à un circuit d'alimentation, c'est ce que l'on appelle la commande « zonale », soit déformer globalement toutes les zones en utilisant toutes les N électrodes raccordées respectivement aux N circuits d'alimentation, c'est ce que l'on appelle la commande « modale ».

Par exemple, dans le cas d'une commande modale, les aberrations mesurées dans la pupille de sortie, ou restituées à partir d'images fournies par l'instrument lui-même, sont d'abord projetées sur une base de n polynômes de Zernicke (polynômes orthogonaux normalisés à deux variables ρ et θ sur un disque), qui offre l'avantage de classer les défauts des instruments d'optique par ordre d'influence décroissante. Dans cette base, la surface d'onde (c'est-à-dire les aberrations) est donc représentée par un vecteur à n composantes qui représentent respectivement les poids des n polynômes dans la déformation globale de la surface d'onde (qui devrait être un plan si l'instrument était parfait).

A un coefficient d'amplitude près, chaque polynôme décrit une forme propre que l'on peut réaliser au mieux en envoyant des tensions particulières sur les N électrodes dont on dispose. Le système de commande garde donc en mémoire n groupes de N tensions particulières. En pondérant chaque groupe par les n composantes du vecteur représentant la surface d'onde et en effectuant la demi somme algébrique pour chaque électrode, on obtient les N tensions de commande de déformation annulant au mieux les aberrations dans la pupille. On peut choisir de corriger seulement les k premiers défauts associés aux k premiers polynômes. Plus la profondeur de correction k est élevée, plus il faut disposer d'actionneurs sur la surface du miroir.

Chaque circuit d'alimentation C1 i est raccordé à la masse électrique et au contact de la face avant FAC de la première couche électro-active CP1. Ainsi, il est possible d'établir localement une différence de potentiel choisie dans chaque zone de la première couche électro-active CP1 située au droit d'une électrode EL. Cette différence de potentiel crée dans la zone concernée un champ électrique transversal (c'est-à-dire perpendiculaire à la première couche électro-active CP1) qui induit une déformation locale par effet électrique. Cet effet électrique est plus précisément une électrostriction tendant à faire varier l'épaisseur de la première couche électro-active.

Cette variation d'épaisseur suit une loi sensiblement quadratique. A titre d'exemple, pour obtenir une augmentation de l'épaisseur de la première couche électro-active CP1 d'environ 1%, il faut appliquer au matériau électro-actif un champ électrique d'environ 40 MV/m, tandis que pour obtenir une augmentation d'épaisseur d'environ 7%, il faut appliquer au matériau électro-actif un champ électrique d'environ 170 MV/m.

La couche réfléchissante CR est par exemple réalisée dans un matériau métallique tel que l'Or, notamment pour les applications dans le domaine infrarouge, avec une éventuelle couche de protection. Mais, on peut également la réaliser en argent ou en aluminium protégé pour les applications dans le domaine visible. Elle est par exemple déposée sous vide sur la face avant FAC de la première couche électro-active CP1. Par exemple, la couche réfléchissante CR confère une très bonne qualité optique au miroir plan M, typiquement λ/50 rms (pour « root mean square » - racine carré de la valeur quadratique moyenne qui représente la norme de la déformation du miroir M). La surface du miroir étant un plan aux écarts près, la valeur quadratique moyenne est l'intégrale, sur toute la surface du miroir, du carré des écarts, rapportée à cette même surface.

La couche réfléchissante CR assure la qualité de la réflexion en termes d'énergie absorbée, d'énergie réfléchie et d'énergie diffusée, tandis que le poli du film (ou couche) électro-actif détermine la qualité optique du miroir M.

Lorsque l'étage E1 est réalisé sous la forme d'un circuit imprimé, une partie au moins de chaque circuit d'alimentation électrique C1i peut y être définie. En outre, lorsque le circuit imprimé est de type 3D et que le matériau électro-actif est monocouche, il est possible de raccorder les circuits d'alimentation électrique C1i aux faces arrières des électrodes EL. Cela permet de s'affranchir des fils de connexion ou des pistes conductrices au niveau de la face avant FAE du premier étage E1.

La face arrière de la première couche électro-active CP1 étant placée sur une surface rigide, contrairement à sa face avant FAC solidarisée à la couche réfléchissante CR, la déformation locale d'une zone ZD se fait par fluage rapide de matière au niveau de ladite face avant FAC de cette zone ainsi qu'au niveau de la partie de la couche réfléchissante CR placée sensiblement au dessus de ladite zone. Ce fluage de matière se traduit par l'apparition de bosse(s) au niveau de la face avant FAC de la zone déformée ZD ainsi qu'au niveau de la partie de la couche réfléchissante CR placée au dessus de ladite zone. La face active du miroir M, située du côté de la couche réfléchissante CR, peut être ainsi déformée de manière à compenser les aberrations géométriques de l'instrument optique dans lequel ledit miroir M est installé.

On entend ici par « compenser les aberrations géométriques » le fait de corriger les écarts de phase des ondes lumineuses réfléchies, c'est-à-dire la surface d'onde.

La déformation locale de la première couche électro-active CP1 dépend de plusieurs paramètres et notamment de son épaisseur, du matériau électro-actif dans lequel elle est réalisée et de la différence de potentiel choisie, laquelle dépend également de son épaisseur. Par exemple, pour une couche électro-active CP1 en copolymère dopé au fluor de 100 µm d'épaisseur et une haute tension égale à environ 17 kV, on obtient une déformation égale à environ 7% de l'épaisseur pour un champ électrique de 170 MV/m, soit 7 µm de déformation.

Par exemple pour déformer localement une zone choisie de la première couche électro-active CP1, on peut commencer par appliquer une même tension sur l'ensemble des électrodes EL du premier étage E1, ce qui induit une augmentation d'épaisseur sensiblement constante sur l'ensemble de la première couche électro-active CP1, lorsque toute sa surface est contrôlée par des électrodes EL, et donc une déformation initiale sensiblement uniforme. Puis, on réduit ou on augmente la tension appliquée à l'électrode (ou aux électrodes) qui contrôle(nt) la zone choisie à déformer de manière à réduire ou augmenter l'amplitude de la déformation initiale.

En cas de panne d'alimentation, la déformation initiale uniforme disparaît, laissant ainsi la surface réfléchissante plane, contrairement aux miroirs à effet électrostatique de l'art antérieur.

Lorsque les dimensions des électrodes EL sont (très) grandes par rapport à l'épaisseur de la première couche CP1, typiquement cent fois, la déformation locale, subie par la première couche électro-active CP1 sous l'action du champ électrique appliqué, se présente sensiblement sous la forme d'un créneau résultant d'un effet de bord.

Afin d'étendre cet effet de bord à tout ou partie d'une électrode EL, il est possible de définir dans cette électrode EL au moins un évidement. Toute forme d'évidement peut être envisagée, et notamment une forme en étoile à n branches (par exemple n = 24), ou une forme en cercle.

Le nombre d'électrodes EL présentant un évidement peut varier. Il peut être égal à un ou plus au sein d'un étage d'électrode. En outre, on peut envisager que les formes des évidements diffèrent d'une électrode à l'autre.

Afin de réduire les tensions appliquées aux électrodes, on peut utiliser une structure multicouches, du type de celle illustrée sur la figure 4. Plus précisément, la tension nécessaire à la déformation dépendant de l'épaisseur de la couche électro-active, il est possible d'utiliser plusieurs couches électro-actives (au moins deux) d'épaisseurs moyennes ou faibles plutôt qu'une unique couche d'épaisseur importante. Ainsi, on peut obtenir la déformation précitée de 7µm avec 10 couches de 10 µm d'épaisseur mais avec seulement 1,7 kV appliqué sur chaque couche.

Dans l'exemple illustré sur la figure 4, le miroir M comporte, intercalé entre la face arrière du premier étage E1 et la face avant FAS du substrat S, une première couche isolante intercalaire Cl1, puis une première couche conductrice intercalaire EM1 définissant une électrode de masse raccordée à la masse électrique, puis une deuxième couche électro-active CP2 dont la face arrière est solidarisée à un deuxième étage E2 comportant au moins deux électrodes planes EL, puis une deuxième couche isolante intercalaire CI2, puis une deuxième couche conductrice intercalaire EM2 définissant une autre électrode de masse raccordée à la masse électrique, puis une troisième couche électro-active CP3 dont la face arrière est solidarisée à la face avant d'un troisième étage E3 comportant au moins deux électrodes planes EL dont la face arrière est solidarisée à la face avant FAS du substrat S.

Dans une variante de réalisation simplifiée, on peut se passer des couches isolantes intercalaires CI1 et CI2. Dans ce cas, les couches conductrices intercalaires EM1 et EM2 sont respectivement intercalées entre les faces arrières des premier E1 et second E2 étages d'électrodes et les faces avant des deuxième CP2 et troisième CP3 couches électro-actives.

Dans l'exemple illustré sur la figure 4, toutes les électrodes de masse EM1 et EM2 (et la couche réfléchissante CR qui joue également ce rôle) sont reliées entre elles électriquement et toutes les électrodes d'une même pile (c'est-à-dire appartenant à des étages différents mais placées les unes au-dessus des autres) également.

Mais on pourrait imaginer de commander toutes les électrodes avec seulement deux tensions, par exemple +U et -U, le potentiel de la masse étant à la valeur zéro (0). L'amplitude de la déformation selon une pile est alors contrôlée par le nombre d'électrodes mises sous tension ou à zéro au sein de cette pile. Avec dix couches, la déformation se trouve quantifiée approximativement au vingtième de la déformation totale possible. Dans ce cas, les électrodes d'une même pile sont toutes indépendantes les unes des autres. Plus précisément, les électrodes du deuxième étage E2 sont raccordées à des deuxièmes circuits d'alimentation électrique C2i (ici i = 1 à N), et les électrodes du troisième étage E3 sont raccordées à des troisièmes circuits d'alimentation électrique C3i (ici i = 1 à N).

En plaçant sous des potentiels électriques choisis les électrodes EL des trois étages E1 à E3, qui sont placées les unes au dessus des autres, on peut déformer localement et simultanément les trois zones superposées correspondantes et ainsi obtenir une déformation cumulée équivalente à celle que l'on obtiendrait avec une unique couche électro-active d'épaisseur importante, mais pour une tension notablement inférieure.

Les électrodes planes EL du deuxième étage E2 peuvent être sensiblement de même forme et placées sensiblement au droit des électrodes du premier étage E1, tout comme celles du troisième étage E3.

Mais cela n'est pas une obligation. On peut en effet envisager que les électrodes EL des différents étages E1, E2 et E3 soient sensiblement de même forme et placées les unes au dessus des autres dans des positions partiellement décalées de manière à se recouvrir partiellement. Cela permet en effet de définir au droit de chaque recouvrement d'électrodes une zone de déformation de taille inférieure à celle des électrodes impliquées dans ledit recouvrement. Dans ce cas, les tensions de commande des électrodes EL appartenant à des étages différents doivent rester indépendantes. Par exemple, en utilisant des électrodes de forme hexagonale, décalées d'un étage à l'autre, on peut définir des zones de recouvrement de type triangulaire.

Dans ce deuxième exemple de réalisation, comme dans le premier, il est possible d'utiliser des électrodes EL comportant (au moins pour l'une de celles de l'un des étages) un ou plusieurs évidements, de manière à étendre l'effet de bord induit par l'effet électrique subit par chaque couche électro-active CP1, CP2, CP3.

Cette solution multicouches est envisageable du fait qu[0]e les électrodes sont des métallisations (réalisées sous vide ou non) de quelques microns d'épaisseur et qui de ce fait ne présentent pas réellement de raideur.

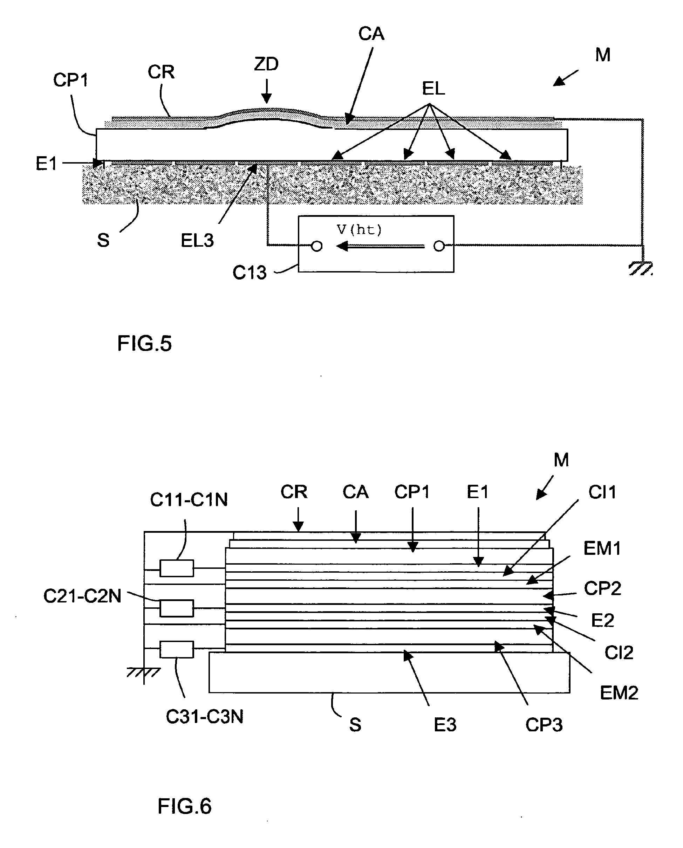

On se réfère maintenant à la figure 5 pour décrire un troisième exemple de réalisation d'un miroir actif (ou déformable) selon l'invention.

Ce troisième exemple de réalisation reprend l'intégralité des constituants du premier exemple de réalisation, décrit précédemment en référence aux figures 1 à 3, et comporte en complément une couche intercalaire additionnelle CA semi-rigide et conductrice (ou rendue conductrice).

Cette couche intercalaire additionnelle CA est intercalée entre la couche réfléchissante CR, qui définit une électrode de masse, et la première couche électro-active CP1. Elle est destinée à effectuer un filtrage spatial des déformations induites sur la première couche électro-active CP1 par les premiers circuits d'alimentation électrique C1i.

En effet, comme évoqué précédemment, lorsque les dimensions des électrodes EL sont (très) grandes par rapport à l'épaisseur de la première couche CP1, typiquement cent fois, la déformation locale se présente sensiblement sous la forme d'un créneau résultant d'un effet de bord. La couche intercalaire additionnelle CA est donc destinée à « lisser » ce créneau de manière à définir localement une bosse ne présentant pas (ou quasiment pas) de forme angulaire.

Cette couche intercalaire additionnelle CA est par exemple réalisée dans un matériau métallique ou dans un matériau semiconducteur, comme par exemple le silicium.

Par ailleurs, cette couche intercalaire additionnelle CA présente de préférence une épaisseur comprise entre environ une dizaine de microns et quelques centaines de microns.

En outre, la couche intercalaire additionnelle CA est préférentiellement solidarisée par adhésion aux couches CR et CP1 qui l'entourent. Plus précisément, il est préférable de déposer la couche réfléchissante CR sur la couche intercalaire additionnelle CA après avoir déposé cette dernière sur la première couche électro-active CP1 avant séchage.

Dans ce troisième exemple de réalisation, comme dans les deux précédents, il est possible d'utiliser des électrodes EL comportant, au moins pour l'une d'entre elles, un ou plusieurs évidements, de manière à étendre l'effet de bord induit par l'effet électrique subit par la première couche électro-active CP1.

On se réfère maintenant à la figure 6 pour décrire un quatrième exemple de réalisation d'un miroir actif (ou déformable) selon l'invention.

Ce quatrième exemple de réalisation reprend l'intégralité des constituants du deuxième exemple de réalisation, décrit précédemment en référence à la figure 4, et comporte en complément au moins une couche intercalaire additionnelle CA semi-rigide et conductrice (ou rendue conductrice) intercalée entre la couche réfléchissante CR (définissant une électrode de masse) et la première couche électro-active CP1.

Cette couche intercalaire additionnelle CA est identique à celle décrite précédemment en référence à la figure 5.

Dans ce quatrième exemple de réalisation, comme dans les trois précédents, il est possible d'utiliser des électrodes EL comportant, au moins pour l'une d'entre elles, un ou plusieurs évidements, de manière à étendre l'effet de bord induit par l'effet électrique subit par chaque couche électro-active CP1, CP2, CP3.

Par ailleurs, dans ce quatrième exemple de réalisation, comme dans le deuxième, les électrodes EL des différents étages peuvent être entièrement, ou seulement partiellement, superposées les unes au dessus des autres.

En outre, la variante simplifiée du deuxième exemple de réalisation (illustrée sur la figure 4), c'est-à-dire sans couche intercalaire isolante, s'applique également à ce quatrième exemple de réalisation.

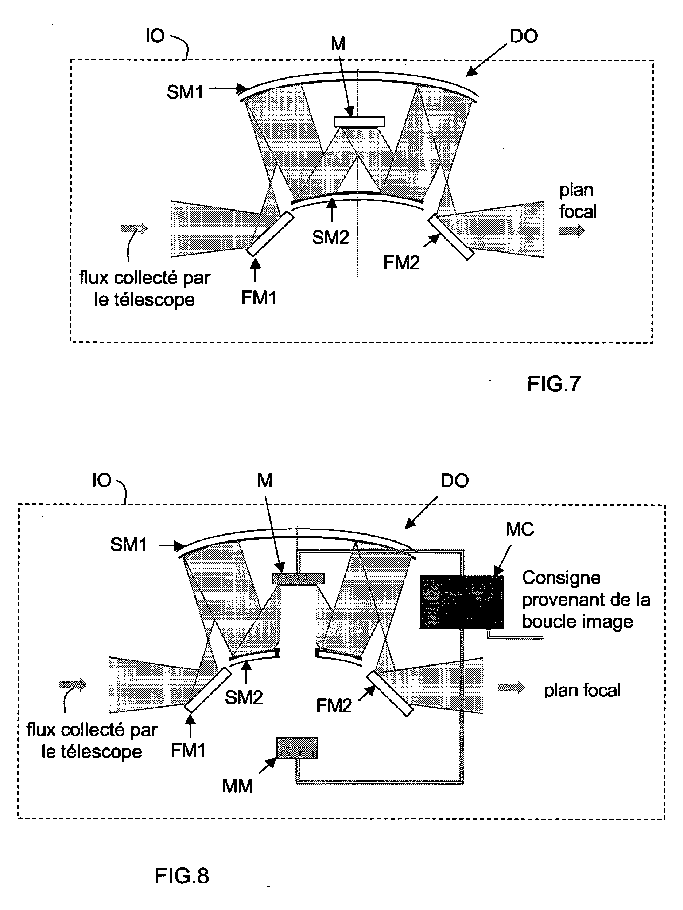

On a représenté sur la figure 7 un premier exemple, non limitatif, d'une partie d'un instrument d'observation IO équipé d'un miroir selon l'invention M. Dans cet exemple, l'instrument IO est un télescope, par exemple de type Cassegrain ou Korsch ou encore Ritchey-Chrétien, équipé de ce que l'homme de l'art appelle un dispositif Offner DO, dans lequel est intégré un miroir déformable (ou actif) M selon l'invention.

Ce dispositif Offner est destiné à faire fonctionner le miroir déformable M, et plus précisément à réaliser une image de la pupille du télescope sur le plan du miroir déformable M où s'effectue la correction de surface d'onde. Pour ce faire, il intercepte la totalité du flux lumineux collecté par le télescope avant qu'il n'atteigne son plan focal.

Le dispositif Offner DO représenté comporte deux miroirs de renvoi FM1 et FM2 et deux miroirs sphériques SM1 et SM2, entre lesquels est intercalé le miroir déformable M selon l'invention.

Le premier miroir de renvoi FM1 est chargé de réfléchir le flux de photons, qui a été collecté par le télescope (matérialisé par la flèche de gauche), en direction du premier miroir sphérique SM1, lui même chargé de réfléchir une première fois les photons en direction du second miroir sphérique SM2 qui est chargé à son tour de réfléchir les photons une première fois en direction du miroir déformable M, lequel les réfléchit vers le second miroir sphérique SM2 qui les réfléchit à son tour une seconde fois vers le premier miroir sphérique SM1, chargé de les réfléchir une seconde fois vers le second miroir de renvoi FM2, lui-même chargé de les réfléchir vers le plan focal du télescope.

Par ailleurs, afin de tenir compte des éventuelles variations de comportement du matériau électro-actif constituant les électrodes EL, on peut adjoindre à l'instrument d'observation IO de la figure 7 une boucle d'asservissement locale destinée à commander précisément ses différentes électrodes EL. Un tel instrument d'observation IO est en partie illustré sur la figure 8.

La boucle d'asservissement locale comporte par exemple un module de mesure MM chargé, par exemple, d'effectuer des mesures interférométriques sur la face active du miroir déformable M, et un module de commande MC chargé de contrôler les tensions appliquées aux différentes électrodes en fonction des mesures fournies par le module de mesure MM et de la consigne provenant de la boucle image du télescope (non représentée).

Ce principe de correction de forme peut être appliqué à toute la surface réfléchissante d'un grand miroir de télescope revêtu du matériau électro-actif comme indiqué précédemment. Dans ce cas, la consigne d'asservissement est élaborée à partir de la surface idéale (par exemple une parabole) que doit présenter la surface réfléchissante du miroir. En orbite, les déformations proviennent principalement d'effets thermiques. Au sol, les déformations proviennent également des effets de la pesanteur fonction de l'orientation du télescope.

L'invention est particulièrement avantageuse, notamment pour les missions d'observation en orbite du fait qu'elle n'impose aucune pièce mécanique en mouvement. En outre, en l'absence de tension d'alimentation, le profil du miroir demeure inchangé (par exemple parfaitement plan), quasiment sans déplacement de son plan moyen, si bien que le miroir ne fait pas varier la focale de l'instrument optique, qui peut donc continuer à fonctionner avec une petite dégradation des images due à l'absence de compensation de ses aberrations géométriques.

L'invention ne se limite pas aux modes de réalisation de miroir déformable et d'instruments d'optique décrits ci-avant, seulement à titre d'exemple. L'invention est définie par les revendications ci-après.

## Revendications

1. Miroir déformable (M), comprenant i) un substrat (S) isolant électriquement et présentant une face avant sensiblement plane, ii) un premier étage (E1) comprenant au moins deux électrodes planes (EL) placées en des endroits choisis au dessus de ladite face avant du substrat (S), iii) une première couche (CP1) en matériau électro-actif placée au contact d'une face avant des électrodes (EL) dudit premier étage (E1) et propre à être déformée localement sous l'action d'une différence de potentiel électrique locale choisie, iv) une couche réfléchissante (CR) électriquement conductrice, définissant une électrode de masse raccordée à une masse électrique et placée au dessus d'une face avant de ladite première couche électro-active (CP1), et v) des premiers circuits d'alimentation électrique (C1i) chacun raccordés, d'une part, à ladite masse électrique, et d'autre part, à au moins l'une des électrodes (EL) dudit premier étage (E1) de manière à instaurer localement, sur ordre, une différence de potentiel choisie propre à déformer localement une zone (ZD) de la première couche électro-active (CP1) placée sensiblement au droit de ladite électrode (EL) ; **caractérisé en ce qu'**il comprend en outre i) au moins un second étage (E2) comprenant au moins deux électrodes planes (EL) et intercalé entre ladite face avant du substrat (S) et une face arrière du premier étage (E1), ii) au moins une couche conductrice intercalaire (EM1, EM2), définissant une électrode de masse raccordée à ladite masse électrique et intercalée entre une face arrière du premier étage (E1) et ledit second étage(E2), iii) au moins une seconde couche (CP2, CP3) en matériau électro-actif, intercalée entre une face avant des électrodes (EL) dudit second étage (E2) et une face arrière de ladite couche conductrice intercalaire (EM1, EM2), et propre à être déformée localement sous l'action d'une différence de potentiel électrique choisie, et iv) des seconds circuits d'alimentation électrique (C2i) chacun raccordés, d'une part, à ladite masse électrique, et d'autre part, à au moins l'une des électrodes (EL) dudit second étage (E2) de manière à instaurer localement, sur ordre, une différence de potentiel choisie propre à déformer localement une zone de la seconde couche électro-active (CP2) placée sensiblement au droit de ladite électrode (EL).

2. Miroir selon la revendication 1, **caractérisé en ce que** les électrodes (EL) de chaque étage (E1, E2, E3) sont sensiblement de même forme et placées sensiblement les unes au dessus des autres.

3. Miroir selon la revendication 1, **caractérisé en ce que** les électrodes (EL) de chaque étage (E1, E2, E3) sont sensiblement de même forme et placées les unes au dessus des autres dans des positions partiellement décalées de manière à se recouvrir partiellement.

4. Miroir selon l'une des revendications 1 à 3, **caractérisé en ce qu'**il comprend au moins une couche isolante intercalaire (CI1, CI2) intercalée entre la face arrière du premier étage d'électrodes (E1) et ladite couche conductrice intercalaire (EM1, EM2).

5. Miroir selon l'une des revendications 1 à 4, **caractérisé en ce que** chaque couche de matériau électro-actif (CP1, CP2, CP3) est solidarisée par adhésion aux couches qui l'entourent.

6. Miroir selon l'une des revendications 1 à 5, **caractérisé en ce que** chaque étage (E1, E2, E3) est un circuit imprimé sur lequel sont définies lesdites électrodes (EL).

7. Miroir selon l'une des revendications 1 à 6, **caractérisé en ce que** lesdites électrodes (EL) sont raccordées à leurs circuits d'alimentation électrique respectifs (C1i, i, C2i, C3i) par une face arrière opposée à leur face avant.

8. Miroir selon l'une des revendications 1 à 7, **caractérisé en ce que** lesdites électrodes (EL) de chaque étage (E1, E2, E3) sont de forme sensiblement hexagonale et disposées les unes par rapport aux autres conformément à un pavage triangulaire.

9. Miroir selon l'une des revendications 1 à 8, **caractérisé en ce que** l'une au moins des électrodes (EL) de chaque étage (E1, E2, E3) comprend au moins un évidement de forme choisie.

10. Miroir selon la revendication 9, **caractérisé en ce que** ledit évidement est en forme d'étoile à n branches.

11. Miroir selon l'une des revendications 1 à 10, **caractérisé en ce que** chaque déformation locale est fonction de la différence de potentiel choisie, de l'épaisseur de la couche électro-active (CP1, CP2, CP3) concernée et du type du matériau électro-actif de ladite couche électro-active concernée.

12. Miroir selon l'une des revendications 1 à 11, **caractérisé en ce que** ledit matériau électro-actif est un terpolymère.

13. Miroir selon la revendication 12, **caractérisé en ce que** ledit terpolymère est un copolymère dopé au fluor.

14. Miroir selon l'une des revendications 1 à 13, **caractérisé en ce que** ladite couche réfléchissante (CR) est réalisée dans un matériau métallique.

15. Miroir selon l'une des revendications 1 à 14, **caractérisé en ce qu'**il comprend au moins une couche intercalaire additionnelle (CA) semi-rigide et conductrice, placée entre ladite couche réfléchissante (CR) et ladite première couche électro-active (CP1).

16. Miroir selon la revendication 15, **caractérisé en ce que** ladite couche intercalaire additionnelle (CA) présente une épaisseur comprise entre environ une dizaine de microns et quelques centaines de microns.

17. Miroir selon l'une des revendications 15 et 16, **caractérisé en ce que** ladite couche intercalaire (CA) est solidarisée par adhésion à la couche réfléchissante (CR) et à la première couche électro-active (CP1).

18. Instrument d'optique (IO), **caractérisé en ce qu'**il comprend un télescope couplé à un miroir déformable (M) selon l'une des revendications précédentes.

19. Instrument d'optique selon la revendication 18, **caractérisé en ce qu'**il comprend des moyens d'asservissement (MM, MC) propres à effectuer des mesures sur la face active dudit miroir déformable (M) de manière à contrôler sa forme par les tensions appliquées à ses différentes électrodes (EL).

## Claims

1. Deformable mirror (M), comprising i) an electrically insulative substrate (S) having a substantially plane front face, ii) a first stage (E1) comprising at least two plane electrodes (EL) placed at chosen places on top of said front face of the substrate (S), iii) a first layer (CP1) of electroactive material placed in contact with a front face of the electrodes (EL) of said first stage (E1) and adapted to be deformed locally under the action of a chosen local difference of electric potential, iv) an electrically conductive reflecting layer (CR), defining a ground electrode connected to an electric ground and placed on top of a front face of said first electroactive layer (CP1), and v) first electric power supply circuits (C1i) each connected, on the one hand, to said electric ground and, on the other hand, to at least one of the electrodes (EL) of said first stage (E1) in such a manner as to impose locally, on command, a chosen potential difference adapted to deform locally an area (ZD) of the first electroactive layer (CP1) placed substantially in line with said electrode (EL); **characterized in that** it further comprises i) at least one second stage (E2) comprising at least two plane electrodes (EL) interleaved between said front face of the substrate (S) and a rear face of the first stage (E1), ii) at least one conductive interleaved layer (EM1, EM2), defining a ground electrode connected to said electric ground and interleaved between a rear face of the first stage (E1) and said second stage (E2), iii) at least one second layer (CP2, CP3) of electroactive material, interleaved between a front face of the electrodes (EL) of said second stage (E2) and a rear face of said conductive interleaved layer (EM1, EM2), and adapted to be deformed locally under the action of a chosen electric potential difference, and iv) second electric power supply circuits (C2i) each connected, on the one hand, to said electric ground and, on the other hand, to at least one of the electrodes (EL) of said second stage (E2) in such a manner as to impose locally, on command, a chosen potential difference adapted to deform locally an area of the second electroactive layer (CP2) placed substantially in line with said electrode (EL).

2. Mirror according to Claim 1, **characterized in that** the electrodes (EL) of each stage (E1, E2, E3) are substantially of the same shape and placed substantially one on top of the other.

3. Mirror according to Claim 1, **characterized in that** the electrodes (EL) of each stage (E1, E2, E3) are substantially of the same shape and placed one on top of the other in partially offset positions so as to partially overlap.

4. Mirror according to Claims 1 to 3, which comprises at least one insulative interleaved layer (C11, C12) interleaved between the rear face of the first stage of electrodes (E1) and said conductive interleaved layer (EM1, EM2).

5. Mirror according to Claims 1 to 4, **characterized in that** each layer of electroactive material (CP1, CP2, CP3) is attached by adhesion to the layers that surround it.

6. Mirror according to Claims 1 to 5, **characterized in that** each stage (E1, E2, E3) is a printed circuit on which said electrodes (EL) are defined.

7. Mirror according to one of Claims 1 to 6, **characterized in that** said electrodes (EL) are connected to their respective electric power supply circuits (Cli, C2i, C3i) by a rear face opposite their front face.

8. Mirror according to one of Claims 1 to 7, **characterized in that** said electrodes (EL) of each stage (E1, E2, E3) are of substantially hexagonal shape and disposed relative to each other in accordance with a triangular paving.

9. Mirror according to one of Claims 1 to 8, **characterized in that** at least one of the electrodes (EL) of each stage (E1, E2, E3) comprises at least one recess of chosen shape.

10. Mirror according to Claim 9, **characterized in that** said recess is of star shape with n branches.

11. Mirror according to one of Claims 1 to 10, **characterized in that** each local deformation is a function of the chosen difference of potential, of the thickness of the electroactive layer (CP1, CP2, CP3) concerned and of the type of the electroactive material of said electroactive layer concerned.

12. Mirror according to one of Claims 1 to 11, **characterized in that** said electroactive material is a terpolymer.

13. Mirror according to Claim 12, **characterized in that** said terpolymer is a fluorine-doped copolymer.

14. Mirror according to one of Claims 1 to 13, **characterized in that** said reflecting layer (CR) is made from a metallic material.

15. Mirror according to one of Claims 1 to 14, **characterized in that** it comprises at least one semirigid and conductive interleaved additional layer (CA), placed between said reflecting layer (CR) and said first electroactive layer (CP1).

16. Mirror according to Claim 17, **characterized in that** said interleaved additional layer (CA) has a thickness comprised between about 10 microns and a few hundreds of microns.

17. Mirror according to either of Claims 15 and 16, **characterized in that** said interleaved layer (CA) is attached by adhesion to the reflecting layer (CR) and to the first electroactive layer (CP1).

18. Optical instrument (IO), **characterized in that** it comprises a telescope coupled to a deformable mirror (M) according to any one of the preceding claims.

19. Optical instrument according to Claim 18, which comprises servocontrol means (MM, MC) adapted to effect measurements on the active face of said deformable mirror (M) in such a manner as to control its shape by the voltages applied to its various electrodes (EL).

## Patentansprüche

1. Verformbarer Spiegel (M), der i) ein elektrisch isolierendes Substrat (S), das eine im Wesentlichen flache Vorderfläche aufweist, ii) eine erste Lage (E1), die mindestens zwei Flachelektroden (EL) aufweist, die an ausgewählten Stellen oberhalb der Vorderfläche des Substrats (S) angeordnet sind, iii) eine erste Schicht (CP1) aus einem elektroaktiven Material, die in Kontakt zu einer Vorderfläche der Elektroden (EL) der ersten Lage (E1) angeordnet ist und dazu geeignet ist, unter der Einwirkung einer ausgewählten lokalen Differenz des elektrischen Potentials lokal verformt zu werden, iv) eine elektrisch leitende, reflektierende Schicht (CR), die eine Masseelektrode definiert, die mit einer elektrischen Masse verbunden ist und oberhalb einer Vorderfläche der ersten elektroaktiven Schicht (CP1) angeordnet ist, und v) erste Stromversorgungsschaltungen (C1i) aufweist, die jeweils einerseits mit der elektrischen Masse und andererseits mit mindestens einer der Elektroden (EL) der ersten Lage (E1) verbunden sind, um lokal auf Befehl eine ausgewählte Potentialdifferenz herbeizuführen, die dazu geeignet ist, eine Zone (ZD) der ersten elektroaktiven Schicht (CP1), die im Wesentlichen bei dieser Elektrode (EL) angeordnet ist, lokal zu verformen; **dadurch gekennzeichnet, dass** er ferner
i) mindestens eine zweite Lage (E2), die mindestens zwei Flachelektroden (EL) aufweist und zwischen der Vorderfläche des Substrats (S) und einer Rückfläche der ersten Lage (E1) angeordnet ist,
ii) mindestens eine leitende Zwischenschicht (EM1, EM2), die eine Masseelektrode definiert, die mit der elektrischen Masse verbunden ist und zwischen einer Rückfläche der ersten Lage (E1) und der zweiten Lage (E2) angeordnet ist, iii) mindestens eine zweite Schicht (CP2, CP3) aus einem elektroaktiven Material, die zwischen einer Vorderfläche der Elektroden (EL) der zweiten Lage (E2) und einer Rückfläche der leitenden Zwischenschicht (EM1, EM2) angeordnet ist und dazu geeignet ist, unter der Einwirkung einer ausgewählten Differenz des elektrischen Potentials lokal verformt zu werden, und iv) zweite Stromversorgungsschaltungen (C2i) aufweist, die jeweils einerseits mit der elektrischen Masse und andererseits mit mindestens einer der Elektroden (EL) der zweiten Lage (E2) verbunden sind, um lokal auf Befehl eine ausgewählte Potentialdifferenz herbeizuführen, die dazu geeignet ist, eine Zone der zweiten elektroaktiven Schicht (CP2), die im Wesentlichen bei dieser Elektrode (EL) angeordnet ist, lokal zu verformen.

2. Spiegel nach Anspruch 1, **dadurch gekennzeichnet, dass** die Elektroden (EL) einer jeden Lage (E1, E2, E3) im Wesentlichen dieselbe Form aufweisen und im Wesentlichen übereinander angeordnet sind.

3. Spiegel nach Anspruch 1, **dadurch gekennzeichnet, dass** die Elektroden (EL) einer jeden Lage (E1, E2, E3) im Wesentlichen dieselbe Form aufweisen und übereinander an teilweise versetzten Stellen angeordnet sind, sodass sie sich teilweise überlagern.

4. Spiegel nach einem der Ansprüche 1 bis 3, **dadurch gekennzeichnet, dass** er mindestens eine isolierende Zwischenschicht (CI1, CI2) aufweist, die zwischen der Rückfläche der ersten Elektrodenlage (E1) und der leitenden Zwischenschicht (EM1, EM2) angeordnet ist.

5. Spiegel nach einem der Ansprüche 1 bis 4, **dadurch gekennzeichnet, dass** jede Schicht aus elektroaktivem Material (CP1, CP2, CP3) durch Haftung an die Schichten, die sie umgeben, gebunden ist.

6. Spiegel nach einem der Ansprüche 1 bis 5, **dadurch gekennzeichnet, dass** jede Lage (E1, E2, E3) eine gedruckte Schaltung ist, auf der die Elektroden (EL) definiert sind.

7. Spiegel nach einem der Ansprüche 1 bis 6, **dadurch gekennzeichnet, dass** die Elektroden (EL) über eine Rückfläche, die ihrer Vorderfläche gegenüberliegt, mit ihren jeweiligen Stromversorgungsschaltungen (Cli, C2i, C3i) verbunden sind.

8. Spiegel nach einem der Ansprüche 1 bis 7, **dadurch gekennzeichnet, dass** die Elektroden (EL) einer jeden Lage (E1, E2, E3) eine im Wesentlichen hexagonale Form aufweisen und in Bezug aufeinander gemäß einer Dreiecksparkettierung angeordnet sind.

9. Spiegel nach einem der Ansprüche 1 bis 8, **dadurch gekennzeichnet, dass** mindestens eine der Elektroden (EL) einer jeden Lage (E1, E2, E3) mindestens eine Aussparung von ausgewählter Form aufweiset.

10. Spiegel nach Anspruch 9, **dadurch gekennzeichnet, dass** die Aussparung die Form eines Sterns mit n Zacken aufweist.

11. Spiegel nach einem der Ansprüche 1 bis 10, **dadurch gekennzeichnet, dass** jede lokale Vorformung eine Funktion der ausgewählten Potentialdifferenz, der Dicke der betreffenden elektroaktiven Schicht (CP1, CP2, CP3) und der Art des elektroaktiven Materials der betreffenden elektroaktiven Schicht ist.

12. Spiegel nach einem der Ansprüche 1 bis 11, **dadurch gekennzeichnet, dass** das elektroaktive Material ein Terpolymer ist.

13. Spiegel nach Anspruch 12, **dadurch gekennzeichnet, dass** das Terpolymer ein mit Fluor dotiertes Copolymer ist.

14. Spiegel nach einem der Ansprüche 1 bis 13, **dadurch gekennzeichnet, dass** die reflektierende Schicht (CR) aus einem Metallmaterial hergestellt ist.

15. Spiegel nach einem der Ansprüche 1 bis 14, **dadurch gekennzeichnet, dass** er mindestens eine zusätzliche, halbsteife und leitende Zwischenschicht (CA) aufweist, die zwischen der reflektierenden Schicht (CR) und der ersten elektroaktiven Schicht (CP1) angeordnet ist.

16. Spiegel nach Anspruch 15, **dadurch gekennzeichnet, dass** die zusätzliche Zwischenschicht (CA) eine Dicke von zwischen etwa zehn Mikrometern und einigen hundert Mikrometern aufweist.

17. Spiegel nach einem der Ansprüche 15 oder 16, **dadurch gekennzeichnet, dass** die Zwischenschicht (CA) durch Haftung an die reflektierende Schicht (CR) und die erste elektroaktive Schicht (CP1) gebunden ist.

18. Optisches Instrument (IO), **dadurch gekennzeichnet, dass** es ein Teleskop aufweist, das mit einem verformbaren Spiegel (M) nach einem der vorangegangenen Ansprüche gekoppelt ist.

19. Optisches Instrument nach Anspruch 18, **dadurch gekennzeichnet, dass** es Steuerungsmittel (MM, MC) aufweist, die dazu geeignet sind, Messungen an der Wirkfläche des verformbaren Spiegels (M) durchzuführen, um seine Form durch die an seine verschiedenen Elektroden (EL) angelegten Spannungen zu steuern.
